**Europäisches Patentamt**

**European Patent Office**

**Office européen des brevets**

(19)

(11) Veröffentlichungsnummer : **0 355 631 B1**

(12) ## EUROPÄISCHE PATENTSCHRIFT

(45) Veröffentlichungstag der Patentschrift :
**20.05.92 Patentblatt 92/21**

(51) Int. Cl.⁵ : **B23H 1/10**, B01D 65/02

(21) Anmeldenummer : **89114935.3**

(22) Anmeldetag : **11.08.89**

(54) **Vorrichtung zum Aufbereiten der Bearbeitungsflüssigkeit einer Elektroerosionsmaschine.**

(30) Priorität : **19.08.88 DE 3828238**

(43) Veröffentlichungstag der Anmeldung :
**28.02.90 Patentblatt 90/09**

(45) Bekanntmachung des Hinweises auf die
Patenterteilung :
**20.05.92 Patentblatt 92/21**

(84) Benannte Vertragsstaaten :
**CH DE FR GB IT LI LU SE**

(56) Entgegenhaltungen :
**DE-A- 3 727 275**
**JP-A- 6 224 917**
**US-A- 3 992 301**

(73) Patentinhaber : **AG für industrielle Elektronik
AGIE Losone bei Locarno
CH-6616 Losone/Locarno (CH)**

(72) Erfinder : **Budin, Josef
Via Cadogno 3
CH-6648 Minusio (CH)**
Erfinder : **Kutil, Hugo
Zypressenstrasse 17
CH-8408 Winterthur (CH)**
Erfinder : **Levy, Gideon, Dr.
Via Lorcarno 52
CH-6616 Losone (CH)**

(74) Vertreter : **EGLI-EUROPEAN PATENT
ATTORNEYS
Widenmayerstrasse 5
W-8000 München 22 (DE)**

## Beschreibung

Die vorliegende Erfindung betrifft eine Vorrichtung zum Aufbereiten der Bearbeitungsflüssigkeit einer Elektroerosionsmaschine nach dem Oberbegriff des Patentanspruchs 1.

Elektroerosionsmaschinen haben einen mit einer Bearbeitungsflüssigkeit gefüllten Arbeitsbehälter, in den ein mittels einer Elektroerosion zu bearbeitendes Werkstück eingetaucht ist. Die Bearbeitungsflüssigkeit besteht bei sogenannten Drahtschneidemaschinen oder Drahterosionsmaschinen aus deionisiertem Wasser, während sie bei Senkmaschinen aus Kohlenwasserstoffen besteht. Durch das erosive Abtragen von Partikeln aus dem Werkstück vermindert sich die Reinheit der Bearbeitungsflüssigkeit, wodurch sich auch deren elektrische Leitfähigkeit ändert. Um eine gewünschte Qualität der Erosionsbearbeitung aufrechtzuerhalten, ist es nötig, die Bearbeitungsflüssigkeit zu reinigen, um deren elektrische Eigenschaften und deren Reinheit in vorbestimmten Bereichen zu halten.

Allgemein werden im Stand der Technik zur Aufbereitung der Bearbeitungsflüssigkeit konventionelle Filter eingesetzt, die einen vergleichsweise großen Porendurchmesser haben. Bei großen Porenabmessungen derartiger konventioneller Filter ist die Filterwirkung nicht ausreichend, um die Qualität der Bearbeitungsflüssigkeit einer Elektroerosionsmaschine über eine Zeitdauer von mehreren Tagen in einem gewünschten Qualitätsbereich zu halten. Ein Herabsetzen der Porendurchmesser der konventionellen Filter zur Steigerung der Filtrationsqualität führt andererseits zu einem Zusetzen der Filterwandungen.

Aus der Druckschrift DE 3727275 A1 ist eine Vorrichtung der eingangs genannten Art bekannt. Bei dieser Vorrichtung wird die Bearbeitungsflüssigkeit in einem Kreislauf von einem Absetztank mittels einer Pumpe durch ein eine Filtermembran aufweisendes Querstromfilter und von diesem zurück in den Absetztank geführt. Die gereinigte Bearbeitungsflüssigkeit, also der Permeat, gelangt in einen Saubertank, von dem aus er über eine weitere Pumpe dem Arbeitsbereich einer Funkenerosionsmaschine zugeführt wird. In dieser Druckschrift ist auch darauf hingewiesen, daß das Querstromfilter durch Rückspülung gereinigt werden kann, indem von der Austrittsseite des Permeats her unter Druck Permeat in das Querstromfilter eingebracht wird, wodurch die Poren der Filtermembran gereinigt werden können. Aus den Poren herausgedrücktes Partikelmaterial gelangt dann erneut in den Konzentratstrom. Bei dieser bekannten Vorrichtung besteht die Gefahr, daß die Poren des Querstromfilters schnell zugesetzt werden, so daß der Filtrierwirkungsgrad gering ist. Auch wenn durch eine Rückspülung die Poren der Filtermembran immer wieder gereinigt werden, so steht während dieses Reinigungsvorganges das Querstromfilter nicht zur Reinigung der Bearbeitungsflüssigkeit zur Verfügung, wodurch der Filtrierwirkungsgrad nachteilig beeinträchtigt wird.

Bei der Aufbereitung von Bearbeitungsflüssigkeit bei Elektroerosionsmaschinen werden Membranfilter auch für andere Zwecke eingesetzt. So ist beispielsweise aus der JP-OS 62-24917 eine Vorrichtung zum Aufbereiten der Bearbeitungsflüssigkeit einer Elektroerosionsmaschine bekannt, bei der ein Membranfilter eingesetzt wird. Die bekannte Vorrichtung umfaßt einen Behälter für die Bearbeitungsflüssigkeit, der durch eine aus Cellophan bestehende Membran in zwei Bereiche unterteilt ist. Ein erster Bereich steht über eine Pumpe, der ein konventioneller Filter nachgeschaltet ist, mit dem Arbeitsbereich der Elektroerosionsmaschine in Verbindung, der mittels einer weiteren Pumpe wieder in diesen ersten Bereich des Behälters entleerbar ist. Der zweite Bereich des Behälters ist über eine weitere Pumpe an einen Ionentauscher angeschlossen. Die Ionenkonzentration in dem zweiten Behälterbereich liegt um Größenordnungen unter der Ionenkonzentration im ersten Behälterbereich, so daß der Ionentauscher mit einer für sein Betriebsverhalten günstigen, niedrigen Ionendichte betrieben werden kann. Bei dieser bekannten Vorrichtung zum Aufbereiten der Bearbeitungsflüssigkeit dient zum Filtern des Konzentrates also ein konventioneller Filter, während ein Membranfilter lediglich zur einstellbaren Reduktion der Ionendichte für einen Kreislauf eines Ionentauschers eingesetzt wird.

Im Bereich der Filtertechnik mit Membranfiltern ist es bekannt, eine periodische Rückspülung der Membrane vorzunehmen, um einen sich im Laufe des Betriebes an der Membran anlagernden Schmutzkuchen abzuschwemmen. Bei bekannten Membranfilteranlagen wurde zu diesem Zweck eine Zeitsteuerung vorgesehen, die jeweils nach Ablauf einer vorbestimmten Filtrationszeit einen kurzfristigen Rückspülvorgang vornimmt. Bei einer derartigen Filtrationsanlage können die Rückspülzeitintervalle nur dann wirtschaftlich eingestellt werden, wenn sich der Schmutzkuchen an der Membranwandung aufgrund eines vorhersehbar gleichbleibenden Schmutzanfalles mit einer im wesentlichen unveränderlichen Geschwindigkeit aufbaut.

Gegenüber diesem Stand der Technik liegt der vorliegenden Erfindung die Aufgabe zugrunde, eine Vorrichtung zum Aufbearbeiten einer Bearbeitungsflüssigkeit einer Elektroerosionsmaschine so weiterzubilden, daß trotz des bei den verschiedenen Arbeitsweisen einer Elektroerosionsmaschine äußerst unterschiedlichen Schmutzpartikelanfalles pro Zeiteinheit eine hohe Qualität der Bearbeitungsflüssigkeit der Elektroerosionsmaschine über eine lange Zeitdauer aufrechterhalten werden kann.

Diese Aufgabe wird erfindungsgemäß bei einer Vorrichtung zum Aufbereiten der Bearbeitungsflüssigkeit einer Elektroerosionsmaschine nach dem Oberbegriff des Patentanspruchs 1 durch die im kennzeichnenden Teil dieses Patentanspruchs angegebenen Merkmale gelöst.

Der Erfindung liegt die Erkenntnis zugrunde, daß für die Reinigung des Konzentrates einer Elektroerosionsmaschine ein Membranfilter eingesetzt werden kann, wenn dies mit einer Rückspülfrequenz abgereinigt wird, die in Abhängigkeit von einem Parameter des Elektroerosionsprozesses steht, der seinerseits eine Aussagekraft für den Grad des Schutzanfalles bei der Elektroerosionsbearbeitung hat. So ist es möglich, bei einer Grobschnittbearbeitung eines Werkstückes dem hohen Schmutzanfall durch eine hohe Rückspülfrequenz Rechnung zu tragen, während bei einer Feinschnittbearbeitung die Rückspülfrequenz drastisch herabgesetzt werden kann.

Eine besondere praktische Bedeutung kommt dem Gedanken zu, die Rückspülfrequenz in Abhängigkeit von dem zeitlichen Integral über die von der Elektroerosionsmaschine aufgenommene elektrische Leistung oder in Abhängigkeit von dem zeitlichen Integral über den Brennstrom der Elektroerosionsmaschine zu steuern. Eine einfach realisierbare Steuerung der Rückspülfrequenz in Abhängigkeit vom zeitlichen Integral über den Brennstrom ist dadurch möglich, daß die Brennspannung unabhängig von der Betriebsweise der Elektroerosionsmaschine etwa konstant bleibt, so daß der Brennstrom proportional zur Leistung bei der Elektroerosionsbearbeitung ist. Die aufgenommene Leistung bei der Elektroerosionsbearbeitung steht in engem Zusammenhang mit der Menge der pro Zeiteinheit aus dem Werkstück geschnittenen Partikel, die den Schmutzanfall bei der Elektroeroslonsbearbeitung auf der Konzentratseite darstellen. Daher kann durch zeitliche Integration der aufgenommenen Leistung oder des Brennstromes der Elekroerosionsmaschine eine geeignete Größe erzeugt werden, die mit guter Genauigkeit ein Maß für den akkumulierten Schmutz an der Membranwandung darstellt. Da der Schmutzanfall pro Zeiteinheit um Größenordnungen schwanken kann, ist es durch diese Maßnahme möglich, mit der bei periodischer Rückspülung nur für konstanten Schmutzanfall geeigneten Rückspültechnik eine sich an die stark schwankenden, besonderen Bedürfnisse der elektroerosionstechnik angepaßte Aufbereitung der Bearbeitungsflüssigkeit durchzuführen.

Weiterhin wurde festgestellt daß sich bei dem Membranfilter der Schmutzkuchen besonders stark am Eingang des Konzentratstromes aufbaut. Nach einer bevorzugten Weiterbildung der Erfindung ist vorgesehen, die Strömungsrichtung des Konzentratstromes durch das Filter umzukehren und dann das Rückspülen durchzuführen. Damit werden die beim Rückspülen von der Membranwand abgedrückten Schmutzpartikel, die dann ja in hoher Konzentration vorliegen, nicht mehr durch das gesamte Membranfilter geleitet, sondern auf direktem Wege abgeführt. Besonders vorteilhaft ist es, in dieser Phase zusätzlich eine Entsorgung des "Schmutzkreislaufes" durchzuführen, indem zumindest ein Teilstrom des Konzentratstromes über ein Vliesfilter geleitet wird. Durch die Kombination dieser drei Maßnahmen: Rückspülen, Strömungsrichtungsumkehr und Vliesfilter erhält man eine hervorragende Reinigung des gesamten Schmutzkreislaufes bei gleichzeitiger Entsorgung desselben von Schmutzpartikeln. Damit kann die Einsatzzeit des Membranfilters erheblich verlängert werden.

Bevorzugte Weiterbildungen und Ausgestaltungen der erfindungsgemäßen Vorrichtung zum Aufbereiten der Bearbeitungsflüssigkeit einer Elektroerosionsmaschine sind Gegenstand der Unteransprüche.

Eine bevorzugte Ausführungsformen der vorliegenden Erfindung wird nachfolgend unter Bezugnahme auf die beiliegende Zeichnungen näher erläutert. Es zeigt:

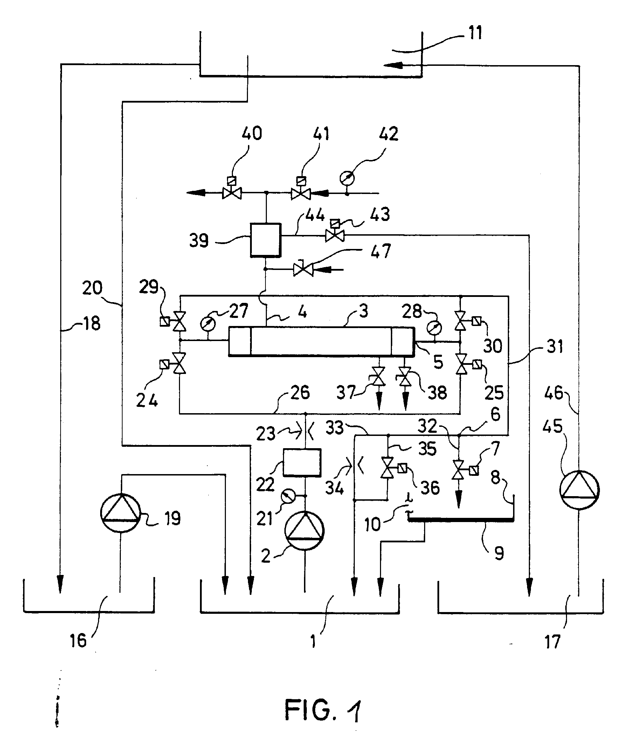

Fig. 1 eine Gesamtdarstellung einer Vorrichtung zum Aufbereiten der Bearbeitungsflüssigkeit einer Elektroerosionsmaschine gemäß der vorliegenden Erfindung.

Fig. 2 eine Schnittdarstellung durch einen Membranfilter, wie er bei einer Vorrichtung gemäß Fig. 1 zum Einsatz kommt.

Wie nachfolgend noch näher erläutert werden wird, beinhaltet eine Vorrichtung zum Aufbereiten der Bearbeitungsflüssigkeit einer Erosionsmaschine ein Konzentratbecken 1. Von dem Konzentratbecken wird mittels einer Pumpe 2 ein Konzentratstrom zu einem Membranfilter 3 gefördert, von dem ein Permeat an einem Permeatausgang 4 abgeleitet wird. Von einem Filterausgang 5 wird der nach der Abzweigung des Permeates mit Feststoffen weiter angereicherte Konzentratstrom zu dem Konzentratbecken 1 zurückgeleitet. Ein Teilstrom des rückgeleiteten Konzentratstromes wird hinter einer Verzweigung durch ein elektrisch betätigbares Teilstromventil 7 zu einem Entsorgungsbehälter 8 zugeführt. Der Entsorgungsbehälter 8 ist als Siebkorb ausgeführt, in den ein Vliesfilter 9 eingelegt ist. Der Entsorgungsbehälter 8 ist oberhalb des Konzentratbekkens 1 angeordnet, so daß der Teilstrom des Konzentrates, der den Vliesfilter 9 des Entsorgungsbehälters 8 durchlaufen hat, in das Konzentratbecken 1 zurückgeführt wird.

Im Laufe des Filterbetriebes baut sich oberhalb der Oberfläche des Vliesfilters 9 ein Filterkuchen auf, der aus den akkumulierten Feststoffen besteht, die aus dem Konzentrat abgeschieden werden. Dieser Filterkuchen bewirkt eine Verstärkung der Filterwirkung des Vliesfilters 9.

Der Entsorgungsbehälter 8 ist mit einem Überlauf 10 versehen, der ein Überströmen des Konzentrates von dem Entsorgungsbehälter 8 in das Konzentratbecken 1 gestattet, wenn der dem Entsorgungsbehälter 8 zugeführte Konzentratteilstrom größer ist als die vorgereinigte Konzentratmenge, die den Filterkuchen und den Vliesfilter 9 durchsikkert.

Durch geeignete Steuerung des Teilstromventils 7 werden dem Entsorgungsbehälter 8 entweder periodisch und diskontinuierlich größere Teilstrommengen pro Zeiteinheit zugeleitet oder konstant eine kleinere Teilstrommenge zugeführt.

In der zeichnerischen Darstellung ist ein einziger Membranfilter 3 gezeigt. In einer praktisch realisierten, bevorzugten Ausführungsform sind jedoch eine Vielzahl von identischen Filterelementen 3 strömungsmäßig in Parallelschaltung vorgesehen. Durch diese Ausgestaltung des Membranfilters als Gruppe einer Vielzahl von rohrförmigen Filterelementen kann eine hohe Filterfläche bei geringem Raumbedarf erzielt werden.

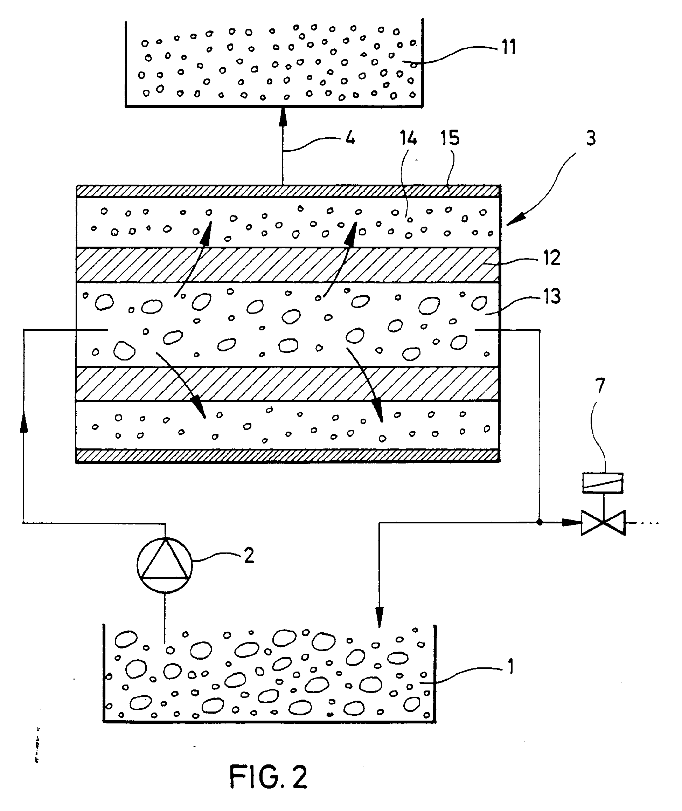

Vorzugsweise besteht der Membranfilter 3 aus Hohlfasern, die aus Polypropylen bestehen und einen Durchmesser von ungefähr 1,5 mm und eine Porengröße von ungefähr 0,2 um haben. Wie in Fig. 2 zu sehen ist, steht der Membranfilter 3 mit seinem Permeatausgang 4 mit einem Permeatbehälter bzw. Saubertank 17 in Verbindung, von welchem aus das Permeat zu einem Arbeitsbehälter der Funkenerosionsmaschine gepumpt wird.

Die Vorrichtung zum Aufbereiten der Bearbeitungsflüssigkeit umfaßt neben dem Arbeitsbehälter 11 und dem Konzentratbecken 1 einen Auffangbehälter 16 und einen Saubertank 17. Der Inhalt des Arbeitsbehälters 11 kann dem Auffangbehälter 16 über eine Entleerungsleitung 18 zugeführt werden. Mittels einer zweiten Pumpe 19 kann der Inhalt des Auffangbehälters 16 nach Sedimentation des Konzentrates in das Konzentratbecken 1 umgepumpt werden. Ferner steht der Arbeitsbehälter 11 über eine Rückflußleitung 20 direkt mit dem Konzentratbecken 1 in Verbindung. Hinter der ersten Pumpe 2 liegt ein Druckmesser 21, ein Grobfilter 22 sowie eine Blende 23, hinter der sich eine Zuflußleitung 26 teilt und zu zwei Eingangsventilen 24, 25 läuft. Das erste Eingangsventil 24 ist mit dem Membranfilter 3 auf einer Seite verbunden, während das andere Eingangsventil 25 mit dem Membranfilter 3 auf der anderen Seite verbunden ist. Der jeweilige Druck vor bzw. hinter dem Membranfilter 3 wird durch einen zweiten und dritten Druckmesser 27, 28 überwacht. Ferner sind an den Konzentratbereich des Membranfilters 3 neben den Eingangsventilen 24, 25 Ausgangsventile 29, 30 angeschlossen, die über eine Konzentratrückführleitung 31 mit dem Konzentratbecken 1 in Verbindung stehen. Die Konzentratrückführleitung 31 teilt sich an dem Teilstromventil 7 in eine Entsorgungsbehälterleitung 32, in eine Blende 34 aufweisende Blendenleitung 33, die im Konzentratbecken 1 mündet, und in eine Druckentlastungsleitung 35, die ein schmutzseitiges Druckentlastungsventil 36 aufweist und sich gleichfalls zum Konzentratbecken 1 hin erstreckt.

Die Eingangsventile 24, 25 und die Ausgangsventile 29, 30 werden derart angesteuert, daß bei Öffnung des Eingangsventiles 24 das weitere Eingangsventil 25 geschlossen ist, während das Ausgangsventil 30 geöffnet ist und das dem ersten Eingangsventil 24 zugewandte Ausgangsventile 29 geschlossen ist. Durch diese Ventilöffnungs- und Schließ-Kombination wird eine Strömungsrichtung festgelegt, die in der bildlichen Darstellung gemäß Fig. 3 von links nach rechts verläuft. Eine Umkehr der Strömungsrichtung durch das Membranfilter 3 kann herbeigeführt werden, indem das Eingangsventil 25 und das Ausgangsventil 29 geöffnet werden, während das Eingangsventil 24 und das Ausgangsventil 30 geschlossen werden.

Der Membranfilter 3 ist mit seinem Permeatausgang 4 an einen Pufferbehälter 39 für das Rückspülen des Membranfilters 3 angeschlossen. Der Pufferbehälter 39 ist über ein Entlüftungsventil 40 entlüftbar und kann zum Zwecke der Abreinigung des Membranfilters 3 durch ein Druckluftventil 41 mit Druckluft beaufschlagt werden, deren Druck durch einen vierten Druckmesser 42 überwacht werden kann.

Der Pufferbehälter 39 steht über eine Rückflußleitung 44, die ein Rückflußventil 43 aufweist, mit dem Saubertank 17 in Verbindung. Das im Saubertank 17 akkumulierte Permeat wird über eine dritte Pumpe 45 mittels einer Permeatleitung 46 in den Arbeitsbehälter 11 rückgeführt. Diese Rückführung des Permeates in den Arbeitsbehälter geschieht vorzugsweise mit einer Förderleistung von ungefähr 50 bis 60 l pro min.

An den Permeatausgang 4 des Membranfilters 3 ist ein Einführventil 47 für eine Säurerückspülung des Membranfilters 3 angeschlossen. Zu dem gleichen Zwecke dienen zwei Entleerungsventile 37, 38, mit denen der Membranfilter 3 vollständig entleert werden kann. Die Säurerückspülung des Membranfilters 3 zum Zwecke seiner Totalreinigung kann dadurch bewerkstelligt werden, daß nach einem Absperren aller übrigen Zufluß- oder Abflußventile 40, 41, 24, 29, 30, 25 eine Säure durch das Einführventil 47 in den Membranfilter 3 eingebracht wird, mit der eine Totalreinigung der Membrane durchgeführt wird. Ein Ablassen der Säure aus dem Membranfilter 3 zum Beseitigen der Säure sowie der aus der Membrane des Membranfilters 3 herausgespülten Rückstände erfolgt über die Entleerungsventile 37, 38.

Nachdem nunmehr die Struktur der erfindungsgemäßen Vorrichtung zum Aufbereiten der Bearbeitungsflüssigkeit einer Elektroerosionsmaschine erläutert worden ist, soll im folgenden deren erfindungsgemäße Betriebsweise geschildert werden.

Die Steuerung der gesamten, in der Figur gezeigten Vorrichtung erfolgt über einen handelsüblichen Prozeßrechner. Insbesondere steuert dieser Rechner auch die Betätigung der einzelnen Ventile für die Rückspülung des Membranfilters 3.

Bei einer gegenwärtig bevorzugten Ausführungsform ermittelt der Prozeßrechner jeweils nach Abschluß

4

des letzten Rückspülvorganges das zeitliche Integral des Brennstromes. Sobald das zeitliche Integral über den Brennstrom einen bestimmten Wert erreicht hat, was der Abtragsleistung und damit der Schmutzpartikelkonzentration entspricht, wird der Rückspülvorgang eingeleitet. Zu diesem Zweck wird das Rückflußventil 43 geschlossen und das Druckluftventil 41, das zwischen der Druckluftquelle (nicht dargestellt) und dem Pufferbehälter 39 liegt, geöffnet. Durch diesen auf das Permeat in dem Pufferbehälter 39 wirkenden Druck, der sich auf die Membrane überträgt, werden die Schmutzpartikeln von der Konzentratseite der Membranwand abgelöst. Eine verstärkte Schmutzablösung und Beschleunigung der Schmutzströmung wird dadurch erzielt, daß der Druck am schmutzseitigen Ausgang des Membranfilters 3 abgesenkt wird, was dadurch bewerkstelligt wird, daß das Druckentlastungsventil 36 geöffnet wird. Dieses Druckentlastungsventil 36 liegt strömungsmäßig als ein Bypaß parallel zu der Blende 34 in der Konzentratrückführleitung 31.

Während des Rückspülvorganges soll die Strömung im Schmutzkreislauf aufrechterhalten bleiben, damit die von der Membranwand losgelösten Schmutzpartikel abtransportiert werden können.

Besonders vorteilhaft ist es, wenn unmittelbar anschließend an den Rückspülvorgang zusätzlich auch noch die Strömungsrichtung des Konzentratstromes durch den Membranfilter 3 umgekehrt wird, was durch die Betätigung der Ventile 24, 29, 25 und 30 erfolgt. Während des Rückspülvorganges ist die Pumpe 2 abgeschaltet. Da sich nämlich die Schmutzpartikel primär am Konzentrateingang des Membranfilters akkumulieren, müssen sie nach dem Rückspülen nicht mehr durch das gesamte Membranfilter laufen, wenn in zeitlichem Zusammenhang mit dem Rückspülen die Strömungsrichtung umgekehrt wird.

Die Rückspülfrequenz wird von dem Prozeßrechner nicht nur in Abhängigkeit von dem Integral über den Brennstrom gesteuert, sondern gleichfalls in Abhängigkeit von dem Werkstückmaterial, der Partikelzusammensetzung und vorbestimmter Technologiedaten bzw. Generatordaten des Generators der Elektroerosionsmaschine. Diese zusätzlichen Parameter neben dem Integral über den Brennstrom können bei einem vorbestimmten Stromintegral durch einfache Elektroerosionsversuche ohne weiteres festgelegt werden.

Die Membran wird durch das Rückspülen nur begrenzt gereinigt. Im Laufe der Betriebszeit stellt sich eine immer stärkere Verstopfung des Membranfilters ein. Es ist daher unumgänglich, nach längeren Betriebszeiten, eine Totalreinigung des Membranfilters durchzuführen. Gemäß der vorliegenden Erfindung wird das Erfordernis der Totalreinigung durch den Prozeßrechner entweder durch Überwachung der Rückspülfrequenz oder durch Zählen der Rückspülvorgänge ermittelt. Wenn die Filterzeitdauer zwischen zwei Rückspülvorgängen einen so niedrigen Wert angenommen hat, daß die Totalreinigung für erforderlich angesehen wird, so betätigt der Prozeßrechner das Einführventil 47 bei unterbrochener Querströmung im Filter und öffnet die Entleerungsventile 37, 38. In diesem Zustand wird eine Säure zur Totalreinigung des Membranfilters durch den Permeatausgang 4 eingeführt. Schmutzteile und sonstige Stoffe, die sich in der Membran abgelagert haben, werden durch die Säure ausgeschwemmt, so daß der Filter wieder seine vorherige Wasserdurchlässigkeit erreicht.

Ein weiterer Parameter, aus dem sich das Erfordernis einer Rückspülung ermitteln läßt, ist der Druckabfall längs des Membranfilters, der über den Differenzdruck am Eingang und am Ausgang ermittelt wird, wofür die Druckmesser 27 und 28 vorgesehen sind. Je stärker das Filter verschmutzt ist, desto größer wird dieser Druckabfall. Da bei zunehmender Verschmutzung des Filters dieser Druckabfall nach jedem Rückspülen in kürzeren Intervallen auftritt, läßt sich hieraus auch das Erfordernis einer Totalreinigung bestimmen.

Nach einer derartigen Totalreinigung muß eine Permeatspülung des Filters vorgenommen werden, um sicherzustellen, daß jegliche Säurereste den Filter verlassen haben. Zu diesem Zweck wird bei geschlossenem Einführventil 47 und bei geöffneten Entleerungsventilen 37, 38 Permeat von dem Pufferbehälter 39 durch Druckbeaufschlagung durch den Filter gespült.

## Patentansprüche

1. Vorrichtung zum Aufbereiten der Bearbeitungsflüssigkeit einer Elektroerosionsmaschine, mit einem Membranfilter (3), dem ein Konzentratstrom von einem Konzentratbecken zuführbar ist und von dem ein Permeatstrom ableitbar ist, und mit einer Rückspülvorrichtung (39, 43, 44, 41) für den Membranfilter (3), mit der bei einem Rückspülen Permeat von der Permeatseite (Permeatausgang 4) durch die Membran zur Konzentratseite des Membranfilters (3) drückbar ist,
dadurch gekennzeichnet,
daß eine Steuerungseinrichtung vorgesehen ist, mit der ein Parameter des Elektroerosionsprozesses, meßbar und in Abhängigkeit von dem gemessenen Wert dieses Parameters Ventile (36, 41, 43) für das Rückspülen betätigbar sind.

2. Vorrichtung nach Anspruch 1,
dadurch gekennzeichnet,
daß als Parameter des Elektroerosionsprozesses mit der Steuerungseinrichtung das zeitliche Integral über die

EP 0 355 631 B1

vom Arbeitsspalt der Elektroerosionsmaschine aufgenommene elektrische Leistung oder über den Brennstrom der Elektroerosionsmaschine meßbar ist.

3. Vorrichtung nach Anspruch 1 oder 2,
dadurch gekennzeichnet,
daß die Rückspülvorrichtung folgende Merkmale aufweist:
einen Pufferbehälter (39), der an den Permeatausgang (4) des Membranfilters (3) angeschlossen ist,
ein Rückflußventil (43) in einer Rückflußleitung (44) zwischen dem Pufferbehälter (39) und einem Saubertank (17) für das Permeat, das bei einem Rückspülen des Membranfilters (3) geschlossen ist, und
eine Druckluftquelle, die über ein Druckluftventil (41) an den Pufferbehälter (39) angeschlossen ist, wobei das Druckluftventil (41) bei einem Rückspülen geöffnet ist.

4. Vorrichtung nach Anspruch 3,
dadurch gekennzeichnet,
daß die Rückspülvorrichtung ferner ein bei einem Rückspülen betätigbares Druckentlastungsventil (36) aufweist, das strömungsmäßig parallel zu einer Blende (34) in einer Konzentratrückführleitung (31) zwischen dem Membranfilter (3) und dem Konzentratbecken (1) liegt.

5. Vorrichtung nach einem der Ansprüche 1 bis 4,
dadurch gekennzeichnet,
daß mit der Steuerungseinrichtung die Zeitdauer zwischen zwei aufeinanderfolgenden Rückspülvorgängen ermittelbar und das Erfordernis einer Totalreinigung des Membranfilters (3) feststellbar ist, wenn diese Zeitdauer kleiner als ein vorgegebener Wert ist.

6. Vorrichtung nach einem der Ansprüche 1 bis 5,
dadurch gekennzeichnet,
daß mit der Steuerungseinrichtung die Anzahl von Rückspülvorgängen zählbar und das Erfordernis einer Totalreinigung des Membranfilters (3) feststellbar ist, wenn die Anzahl der Rückspülvorgänge einen vorgegebenen Wert überschreitet.

7. Vorrichtung nach Anspruch 5 oder 6,
dadurch gekennzeichnet,
daß die Rückspülvorrichtung ein Einführventil (47) an dem Permeatausgang (4) des Membranfilters (3) und wenigstens ein Entleerungsventil (38) auf der Konzentratseite und ein Entleerungsventil auf der Permeatseite des Filters (3) aufweist, und
daß die Rückspülvorrichtung durch Betätigung des Einführventils (37, 38) eine Säurespülung des Membranfilters (3) durchführt, wenn das Erfordernis der Totalreinigung festgestellt ist.

8. Vorrichtung nach einem der Ansprüche 1 bis 7,
dadurch gekennzeichnet,
daß am Konzentratausgang des Membranfilters (3) eine Verzweigung (6) vorgesehen ist, mittels derer ein Teilstrom zu einem Vliesfilter (9) abzweigbar ist und
daß dieser Teilstrom während des Rückspülens des Membranfilters (3) zuschaltbar ist.

9. Vorrichtung nach einem der Ansprüche 1 bis 8,
dadurch gekennzeichnet,
daß eine Umschaltvorrichtung (24, 29, 25, 30) zur Umschaltung der Strömungsrichtung des Konzentratstromes durch den Membranfilter (3) vorgesehen ist und
daß die Umschaltrichtung ebenfalls in Abhängigkeit von einem Parameter des Elektroerosionsprozesses betätigbar ist.

## Claims

1. Device for the treatment of the machining liquid of an electroerosion machine, having a diaphragm-type filter (3) to which a flow of concentrate is suppliable from a concentrate vessel and from which a flow of permeate can be drained, and having a flushing-back device (39, 43, 44, 41) for the diaphragm-type fitter (3), by means of which device permeate can be pressed from the permeate side (permeate outlet 4) through the diaphragm to the concentrate side of the diaphragm-type filter (3) during flushing back,
characterized in that
a control device is provided by means of which a parameter of the electroerosion process can be measured and, as a function of the measured value of this parameter, valves (36, 41, 43) can be actuated for flushing back.

2. Device according to Claim 1,
characterized in that

EP 0 355 631 B1

as a parameter of the electroerosion process the time integral over the electrical power taken up by the operational gap of the electroerosion machine or over the burning current of the electroerosion machine can be measured by the control device.

3. Device according to Claim 1 or 2,
characterized in that
the flushing-back device has the following features:
a buffer container (39) which is connected to the permeate outlet (4) of the diaphragm-type filter (3),
a reflux valve (43) in a reflux line (44) between the buffer container (39) and a clean tank (17) for the permeate, which is closed during fluehing back of the diaphragm-type filter (3), and
a compressed-air source which is connected by way of a compressed-air valve (41) to the buffer container (39), the compressed-air valve (41) being open during flushing back.

4. Device according to Claim 3,
characterized in that
the flushing-back device further has a pressure relief valve (36) which can be actuated during flushing back and which is in parallel, as regards flow, with a screen (34) in a concentrate reflux line (31) between the diaphragm-type filter (3) and the concentrate vessel (1).

5. Device according to one of Claims 1 to 4,
characterized in that
the time between two successive flushing-back procedures can be detected and the result of a total cleaning of the diaphragm-type filter (3) can be established by the control device if this time is smaller than a predetermined value.

6. Device according to one of Claims 1 to 5,
characterized in that
the number of flushing-back processes can be counted and the result of total cleaning of the diaphragm-type filter (3) can be established by the control device if the number of flushing-back processes exceeds a predetermined value.

7. Device according to Claim 5 or 6,
characterized in that
the flushing-back device has an inlet valve (47) at the permeate outlet (4) of the diaphragm-type filter (3) and at least one emptying valve (38) on the concentrate side and one emptying valve on the permeate side of the filter (3), and in that the flushing-back device carries out an acid flushing of the diaphragm-type filter (3) by the actuation of the inlet valve (37, 38) when the requirement for total cleaning is established.

8. Device according to one of Claims 1 to 7,
characterized in that
there is provided at the concentrate outlet of the diaphragm-type filter (3) a branch (6), by means of which a part flow can be branched off to a fleece filter (9), and in that this part flow can be fed in during flushing back of the diaphragm-type filter (3).

9. Device according to one of Claims 1 to 8,
characterized in that
a reversal device (24, 29, 25, 30) is provided for reversing the direction of flow of the flow of concentrate through the diaphragm-type filter (3), and in that the direction of reversal is also actuable as a function of a parameter of the electroerosion process.

**Revendications**

1. Dispositif de traitement du liquide d'usinage d'une machine d'électro-érosion comprenant un filtre à membrane (3), auquel est conduit un courant de liquide concentré provenant d'un réservoir à liquide concentré, et duquel part un courant de perméat, et un dispositif (39, 43, 44, 41) de lavage à contre-courant pour le filtre à membrane (3), par lequel, lors du lavage à contre-courant, du perméat est envoyé sous pression à partir du côté perméat (sortie de perméat 4) à travers la membrane vers le côté liquide du filtre concentré (3) à membrane,
caractérisé en ce
qu'il comporte un dispositif de commande, qui peut mesurer un paramètre du processus d'électro-érosion, et des vannes actionnables en fonction de la valeur mesurée de ce paramètre.

2. Dispositif selon la revendication 1,
caractérisé en ce
que, en tant que paramètre du processus d'électro-érosion avec dispositif de commande, on mesure l'intégrale

7

par rapport au temps de la puissance électrique consommée par la fente de travail créée par la machine d'électro-érosion ou l'intégrale sur le temps du courant d'érosion de la machine d'électro-érosion.

3. Dispositif selon la revendication 1 ou 2,
caractérisé en ce
que le dispositif de lavage à contre-courant présente les caractéristiques suivantes:
un réservoir tampon (39) relié à la sortie de perméat (4) du filtre à membrane (3),
une vanne (43) de retour dans une conduite de contre-courant (44) entre le réservoir tampon (39) et un réservoir propre (17) pour le perméat, et qui est fermée pendant le lavage à contre-courant du filtre à membrane (3),
une source d'air sous pression, qui est reliée par une vanne d'air sous pression (41) au réservoir tampon (39),
la vanne d'air sous pression (41) étant ouverte pendant le lavage à contre-courant.

4. Dispositif selon la revendication 3,
caractérisé en ce
que le dispositif de lavage à contre-courant présente en outre une vanne de détente et de purge (36) actionnable pendant un lavage à contre-courant, qui se trouve par rapport au courant en dérivation parallèlement à un obturateur (34) dans une conduite de retour de liquide concentré (31) entre le filtre à membrane (3) et le réservoir à liquide concentré (1).

5. Dispositif selon l'une des revendications 1 à 4,
caractérisé en ce
que le dispositif de commande fournit la durée séparant deux processus de lavage à contre-courant successifs, et en ce que la nécessité d'un lavage total du filtre à membrane (3) peut être déterminée lorsque cette durée est inférieure à une valeur prédéterminée.

6. Dispositif selon l'une des revendications 1 à 5,
caractérisé en ce
que le dispositif de commande peut compter le nombre de processus de lavage à contre-courant, et en ce que la nécessité d'un lavage total du filtre à membrane (3) peut être déterminée lorsque ce nombre dépasse une valeur prédéterminée.

7. Dispositif selon la revendication 5 ou 6,
caractérisé en ce
que le dispositif de lavage à contre-courant présente une vanne d'amenée (47) à la sortie de perméat (4) du filtre à membrane (3), et au moins une vanne de vidange (38) du côté liquide concentré du filtre à membrane (3) et au moins une vanne de vidange du côté perméat du filtre à membrane (3), et en ce que le dispositif de lavage à contre-courant exécute un lavage à l'acide du filtre à membrane (3) par action sur les vannes de vidange (37, 38), lorsque la nécessité d'un lavage total est déterminée.

8. Dispositif selon l'une des revendications 1 à 7,
caractérisé en ce
qu'il comprend du côté de la sortie du filtre à membrane (3) un branchement (6), grâce auquel une partie du courant peut être détournée vers un filtre en matériau non-tissé (9), et en ce que cette partie de courant est détournée pendant le lavage à contre-courant du filtre à membrane (3).

9. Dispositif selon l'une des revendications 1 à 8,
caractérisé en ce
qu'il comprend un dispositif de commutation (24, 29, 25, 30) pour inverser le sens du courant de liquide concentré à travers le filtre à membrane (3), et en ce que le sens du courant peut également être actionné en fonction d'un paramètre du processus d'électro-érosion.

FIG. 1

FIG. 2